Europäisches Patentamt

European Patent Office

Office européen des brevets

(19)

(11) EP 0 543 707 B1

(12) **FASCICULE DE BREVET EUROPEEN**

(45) Date de publication et mention
de la délivrance du brevet:
**21.07.1999 Bulletin 1999/29**

(51) Int Cl.⁶: **G11B 7/09**, G11B 7/12

(21) Numéro de dépôt: **92403062.0**

(22) Date de dépôt: **13.11.1992**

(54) **Dispositif d'accès et de suivi de pistes pour disque optique**

Vorrichtung zum Spurzugriff und zur Spurverfolgung für optische Platte

Track access and tracking system for optical disc

(84) Etats contractants désignés:
**DE GB IT NL SE**

(30) Priorité: **19.11.1991 FR 9114223**

(43) Date de publication de la demande:
**26.05.1993 Bulletin 1993/21**

(73) Titulaire: **ATG**
**31047 Toulouse Cédex (FR)**

(72) Inventeur: **Bec, Daniel**
**F-92402 Courbevoie Cedex (FR)**

(74) Mandataire: **Simonnot, Bernard et al**
**Cabinet Simonnot**
**35 rue de Clichy**
**75442 Paris Cédex 09 (FR)**

(56) Documents cités:
**EP-A- 0 088 662**      **EP-A- 0 341 820**
**EP-A- 0 406 054**

- **PATENT ABSTRACTS OF JAPAN vol. 014, no. 516 (P-1130)13 Novembre 1990 & JP-A-02 216 625 ( RICOH CO LTD. ) 29 Août 1990**
- **PATENT ABSTRACTS OF JAPAN vol. 011, no. 022 (P-538)21 Janvier 1987 & JP-A-61 194 647 ( FUJITSU LTD. ) 29 Août 1986**
- **PATENT ABSTRACTS OF JAPAN vol. 14, no. 269 (P-1059)11 Juin 1990 & JP-A-02 076 135 ( RICOH CO LTD. ) 15 Mars 1990**
- **PATENT ABSTRACTS OF JAPAN vol. 015, no. 075 (P-1169)21 Février 1991 & JP-A-02 294 942 ( SEIKO EPSON CORP. ) 5 Décembre 1990**

## Description

La présente invention concerne les dispositifs d'accès et de suivi des pistes disposées à la surface de supports mobiles d'informations lisibles et/ou enregistrables optiquement par faisceau laser.

Dans le cas, qui sera toujours pris en exemple par la suite, de supports mobiles en forme de disques, l'information est enregistrée le long de pistes constituées soit d'une spirale unique s'étendant du centre du disque à la périphérie, soit d'une série de cercles concentriques.

Pendant la lecture et/ou l'enregistrement, le disque est mobile. Son mouvement est un mouvement de rotation dont l'axe, perpendiculaire à la surface du disque, passe par le centre de ce dernier.

De façon générale, un dispositif de lecture et/ou d'enregistrement comporte des moyens permettant au faisceau laser d'accéder à la piste devant être lue et/ou entregistrée, et des moyens pour réaliser le suivi de ladite piste. Le suivi de pistes est effectué en surveillant et en corrigeant d'une part la focalisation de la tache lumineuse que fait le faisceau laser à la surface du disque et, d'autre part, l'erreur radiale de positionnement du centre de ladite tache par rapport à l'axe de la piste.

Ainsi, un dispositif d'accès et de suivi de piste classique comprend-il, entre autres, un chariot d'accès, un objectif de focalisation et un miroir de suivi radial de piste. Ces éléments constituent la tête optique du dispositif encore appelée "équipage mobile". A la tête optique mobile est associé un ensemble optique fixe, solidaire du bâti du lecteur-enregistreur, incluant une source laser et des cellules de détection photo-électriques comme cela est montré dans le brevet JP-A-61194647. Quand le dispositif de lecture et/ou d'enregistrement est en fonctionnement, l'objectif de focalisation et le miroir de suivi radial suivent une piste, quelle que soit la position de la tête optique. Lors d'un déplacement de la tête optique le suivi radial cesse mais la focalisation se poursuit. Lors d'un accès, dans un premier temps le chariot d'accès permet d'amener l'objectif de focalisation et le miroir de suivi radial à la verticale de la piste, et, dans un deuxième temps, le miroir de suivi radial de piste est actionné afin d'ajuster le suivi de piste.

Pour réaliser les fonctions d'accès et de suivi radial, il a été décrit, dans le brevet français n° 82 03425, un dispositif dans lequel la bobine motrice d'accès est aussi utilisée pour réaliser le suivi radial.

Selon ce brevet, la tête optique est en glissement à frottement solide sur un rail de guidage et il est prévu des moyens de liaison souple entre les éléments de glissement et la tête optique afin d'obtenir un bon fonctionnement. En effet, l'utilisation de moyens en simple glissement ne permet pas d'obtenir une précision de suivi de piste satisfaisante. D'autre part, dans le brevet français n° 82 03425, l'objectif de focalisation et la bobine qui lui est associée sont reliés au reste de la tête optique, qui contient aussi le miroir de suivi radial et la bobine d'accès et de suivi radial, par l'intermédiaire d'une liaison souple afin d'éviter que l'opération de focalisation ne s'accompagne d'un effet de diaphragme sur l'optique.

Une telle structure de dispositif d'accès et d'asservissement accroît le balourd de l'élément mobile et donc la masse du contre-poids nécessaire à son équilibrage, ce qui a pour principal inconvénient d'augmenter le poids de la tête et d'introduire, de ce fait, une limitation de la vitesse d'accès.

En poursuivant des études sur les dispositifs d'accès et d'asservissement pour disque optique, la Demanderesse s'est aperçue qu'en utilisant une structure monobloc pour l'ensemble formé de la tête optique et des deux bobines prévues dans les dispositifs-moteur, il est possible, comme cela est décrit dans le brevet EP-A-0 406 054, d'éliminer les moyens souples de liaison tout en conservant une excellente précision du positionnement et ainsi d'alléger l'élément mobile, ce qui permet d'accélérer l'accès à la piste.

Cependant, le fait que la tête optique et les deux bobines prévues dans les dispositifs-moteurs soient solidement liées, présente dans certains cas un inconvénient. En effet, lorsque le dispositif d'asservissement est sollicité afin de corriger la focalisation du faisceau laser, son mouvement entraîne un léger décentrement du faisceau sur la pupille de l'objectif de focalisation. Par exemple, quand les supports d'informations utilisés ont une planéité insuffisante, ce décentrement est la cause d'une déformation et d'un élargissement de la tache de focalisation accompagné d'une diminution de la densité de puissance optique de cette tache. Cette déformation peut aller jusqu'à donner à ladite tache une taille ne permettant plus au faisceau laser de lire et/ou d'écrire correctement l'information.

Cette déformation peut-être corrigée à l'aide du miroir inclu dans l'ensemble optique fixe, miroir qui pivote autour d'un axe solidaire du bâti du lecteur-enregistreur. L'axe solidaire du bâti passe par un point distant du centre dudit miroir, comme cela est décrit dans la demande de brevet JP-A-2/216 625.

L'invention remédie à cet inconvénient de l'état de la technique.

La présente invention a pour objet un dispositif d'accès et de suivi de pistes disposées à la surface de supports mobiles contenant des informations lisibles et/ou enregistrables optiquement par faisceau laser tel que défini dans la revendication 1.

C'est un avantage de l'invention que la mobilité de la tête de lecture/enregistrement soit de même qualité que la mobilité du dispositif décrit dans le brevet EP-A-0 406 054.

La présence des moyens de détection du décentrement du faisceau laser permet de corriger la déformation de la tache de focalisation qui peut apparaître dans les dispositifs selon l'art antérieur.

D'autres caractéristiques et avantages de la présente invention apparaîtront à la lecture de la description d'un mode de réalisation préférentiel, faite avec référence aux figures ci-annexées dans lesquelles :

- la figure 1 est un schéma de principe d'un dispositif d'accès et de suivi de piste selon l'art antérieur.
- la figure 2 est un schéma de principe d'un dispositif d'accès et de suivi de piste selon un mode de réalisation préférentiel de l'invention.
- la figure 3 est un schéma synoptique symbolique des boucles d'asservissement du dispositif de la figure 2.
- la figure 4A représente, à titre explicatif, la position occupée par le centre T de la tache de focalisation dans le cas où le servomécanisme selon l'invention n'est pas activé.
- la figure 4B représente la position occupée par le centre T' de la tache de focalisation dans le cas où le servomécanisme selon l'invention est activé.
- les figures 5A et 5B représentent le schéma synoptique du circuit de contrôle de gain de la boucle analogique d'asservissement du servo-moteur linéaire selon le mode de réalisation préférentiel de l'invention.
- la figure 6 est un schéma synoptique du circuit de contrôle de gain d'une boucle numérique d'asservissement du servo-moteur linéaire selon le mode de réalisation préférentiel de l'invention.
- la figure 7 est un schéma synoptique symbolique des boucles d'asservissement du dispositif de la figure 2 dans le cas d'une variante de l'invention.

Sur toutes les figures, les mêmes repères désignent les mêmes éléments. Afin de simplifier les figures, les faisceaux laser ont été dessinés symboliquement, sans tenir compte de la diffraction. Ainsi, convergent-ils en un point unique sur lesdites figures. Il est connu de l'homme de l'art qu'en réalité un faisceau focalisé couvre toujours une surface de dimensions finies. Conformément à la lecture des objets de phase dans les disques optiques, cette surface du faisceau a une dimension transversale au motif prégravé supérieure à la largeur dudit motif.

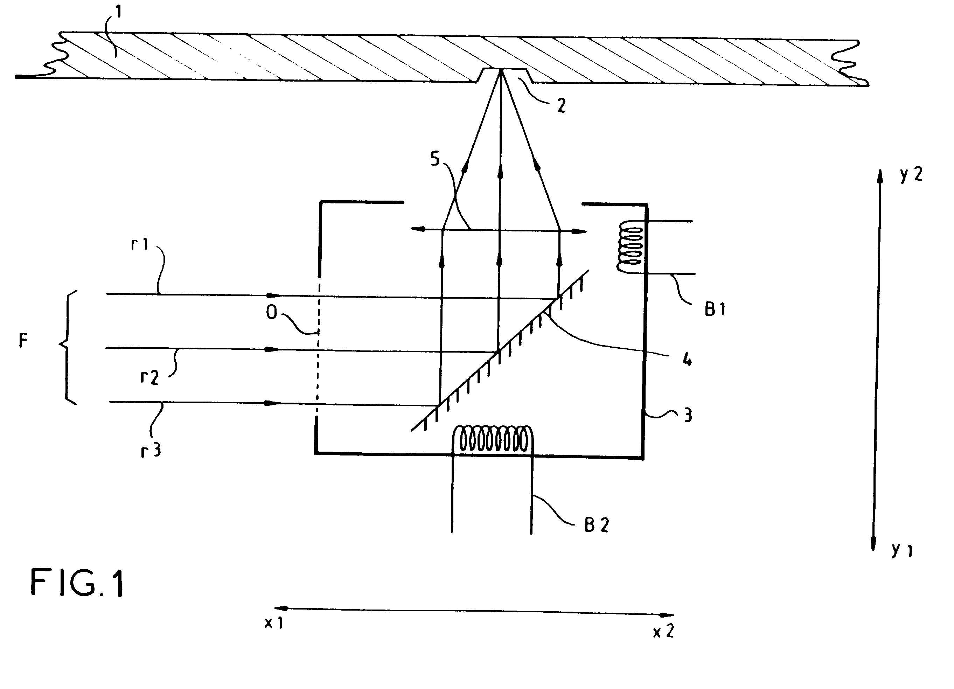

La figure 1 est une vue en coupe, suivant une direction radiale du disque, d'un dispositif d'accès et de suivi de piste selon l'art antérieur décrit dans le brevet EP-A-0 406 054.

Comme cela a été dit précédemment, l'information est enregistrée le long de pistes constituées soit d'une spirale unique, soit d'une série de cercles concentriques.

Une piste est représentée en coupe, à titre d'exemple, par le sillon 2.

Un équipage mobile comportant un chariot rigide 3, pouvant se déplacer suivant l'axe horizontal x1 x2, contient un miroir de renvoi 4 du faisceau laser F vers le support mobile 1 et un objectif 5 permettant de focaliser le faisceau à la surface du disque.

Sur la figure le faisceau F est représenté par trois de ses rayons : le rayon central r2 et les rayons r1 et r3 situés sur les bords du faisceau.

Le miroir de renvoi 4 et l'objectif de focalisation 5 sont reliés rigidement au chariot d'accès 3, comme cela est décrit dans le brevet EP-A-0 405 054. Il en est de même de la bobine motrice B1 qui commande les déplacements verticaux de l'objectif 5 suivant l'axe y1 y2 et de la bobine B2 qui commande les déplacements horizontaux du chariot 3 pour assurer l'accès et le suivi radial du faisceau.

Lorsque l'équipage mobile est sollicité verticalement afin d'ajuster la focalisation, il peut se produire un masquage du faisceau F et donc de la pupille de l'objectif 5 puisque le faisceau, alors, n'est plus correctement centré par rapport à l'ouverture O, par exemple circulaire, du chariot 3.

Dans le cas d'un support mobile présentant une très mauvaise planéité, le déplacement vertical de l'équipage mobile est important. Le masquage de la pupille de l'objectif peut, en conséquence, devenir important. Ceci représente un inconvénient majeur.

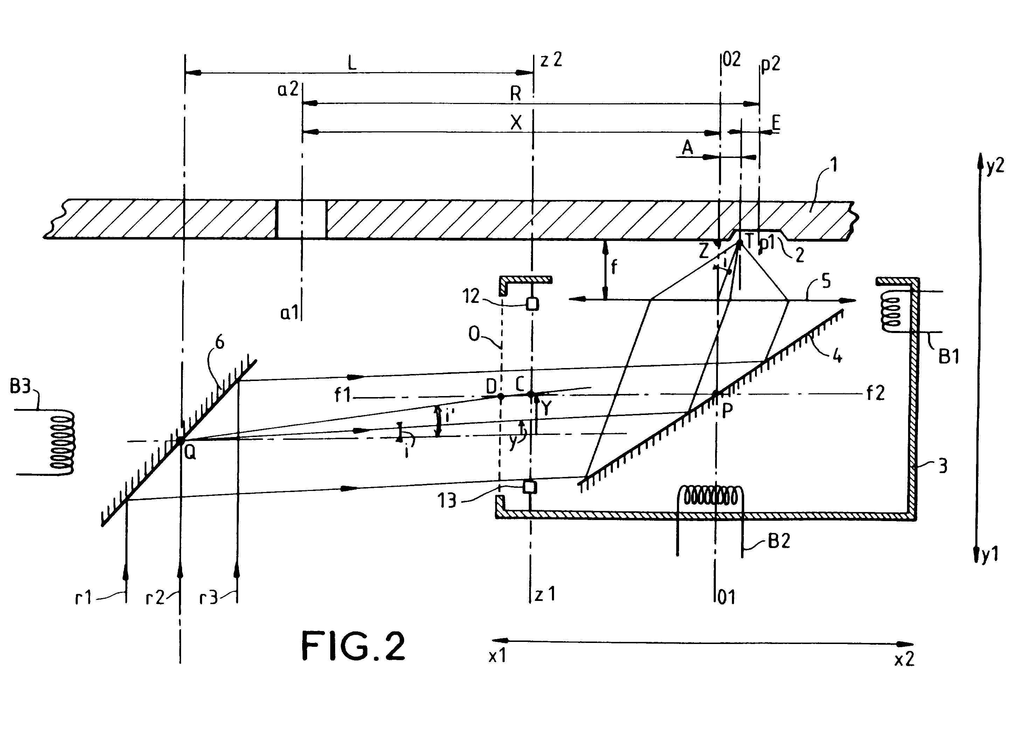

La figure 2 est une vue en coupe, suivant une direction radiale du disque 1, d'un dispositif d'accès et de suivi de piste selon un mode de réalisation préférentiel de l'invention.

Une partie du dispositif est semblable à ce qui est décrit dans le brevet EP-A-0 406 054 : le miroir de renvoi 4 et l'objectif de focalisation 5 sont rigidement liés au chariot d'accès 3.

Toutefois, selon le mode de réalisation préférentiel, la correction de suivi radial n'est plus assurée par le miroir 4.

Cette correction est effectuée à l'aide du miroir 6 qui pivote, à cette fin, autour d'un axe solidaire du bâti du lecteur-enregistreur, perpendiculaire au plan de coupe de la figure 2 et passant par le centre Q dudit miroir.

Le miroir 6 est commandé par la bobine motrice B3.

Soit f1 f2 la droite parallèle à l'axe horizontal x1 x2 et passant par le centre P du miroir 4 et le centre D de l'ouverture O du chariot de la tête optique.

Quand l'équipage mobile est à sa position nominale par rapport au bâti du lecteur-enregistreur, la droite reliant les points P et Q est confondue avec la droite f1 f2. Selon l'invention, deux cellules de détection 12 et 13, reliées rigidement au chariot 3 et placées symétriquement de part et d'autre de la droite f1 f2 suivant l'axe vertical z1 z2, permettent de déceler tout mouvement relatif du faisceau F et du chariot 3 suivant la direction verticale en interférant avec les bords dudit faisceau.

Le décentrement du faisceau est quantifié par le paramètre V qui mesure le décalage vertical du faisceau par rapport à sa position nominale.

Cette grandeur V est composée de deux termes : y et Y.

Le terme y mesure le déplacement correspondant à l'angle i que fait le rayon central r2 du faisceau F avec la droite horizontale passant par le point Q. Cet angle i provient de l'emploi du miroir 6 comme dispositif de correction de suivi radial.

L'angle i est toujours très faible. On peut donc le confondre avec son sinus ou sa tangente. Sur la figure 2, sa valeur est exagérée afin de le rendre clairement visible. La grandeur L mesure la distance séparant le point Q de l'axe vertical z1 z2 sur lequel sont situées les cellules de détection, on peut donc écrire : $y = L \times i$.

Le terme Y mesure, quant à lui, le décalage vertical de l'équipage mobile par rapport à sa position nominale.

Ce terme est relié à l'angle i' que fait la droite horizontale passant par Q avec la droite reliant le point Q au point C situé, sur l'axe z1 z2, à égale distance des cellules 12 et 13.

Pour les mêmes raisons que celles énoncées ci-dessus pour l'angle i, il vient : $Y = L \times i'$.

Les grandeurs qui entrent en jeu dans le dispositif d'asservissement sont :

- le rayon R qui mesure la distance entre l'axe vertical a1 a2 passant par le centre du disque 1 et l'axe vertical p1 p2 passant par l'axe de la piste définie par le sillon 2.
- l'abscisse X qui mesure la distance existant entre l'axe a1 a2 et l'axe o1 o2 perpendiculaire à l'objectif 5 et passant par le centre de celui-ci.
- l'écart A qui mesure, sur le disque, le décalage correspondant à l'angle i, entre le centre T de la tache de focalisation et le point Z d'intersection de l'axe o1o2 avec la surface du disque.
- l'écart de piste E qui mesure le décalage entre le centre de la tache de focalisation et l'axe p1 p2.

R et X mesurent des distances et sont donc des quantités toujours positives. A et E mesurent des écarts par rapport à une position d'équilibre et sont donc des quantités positives ou négatives selon une convention de signe qu'il est inutile de préciser ici.

La position des cellules de détection 12 et 13 est une caractéristique avantageuse du dispositif car lesdites cellules sont sensibles à la fois au déplacement vertical de focalisation et au mouvement angulaire du miroir 6.

Le but de l'invention est de corriger le masquage éventuel de la pupille de l'objectif 5 ; il s'en suit que les détecteurs 12 et 13 devraient, d'un point de vue théorique, être situées exactement dans le plan de la pupille de l'objectif.

Pratiquement, il est plus commode de les positionner comme cela est représenté sur la figure 2.

Cependant toute autre position non éloignée du plan de la pupille et permettant aux détecteurs 12 et 13 de capter de la lumière sur deux bords diamétralement opposés du faisceau est réalisable.

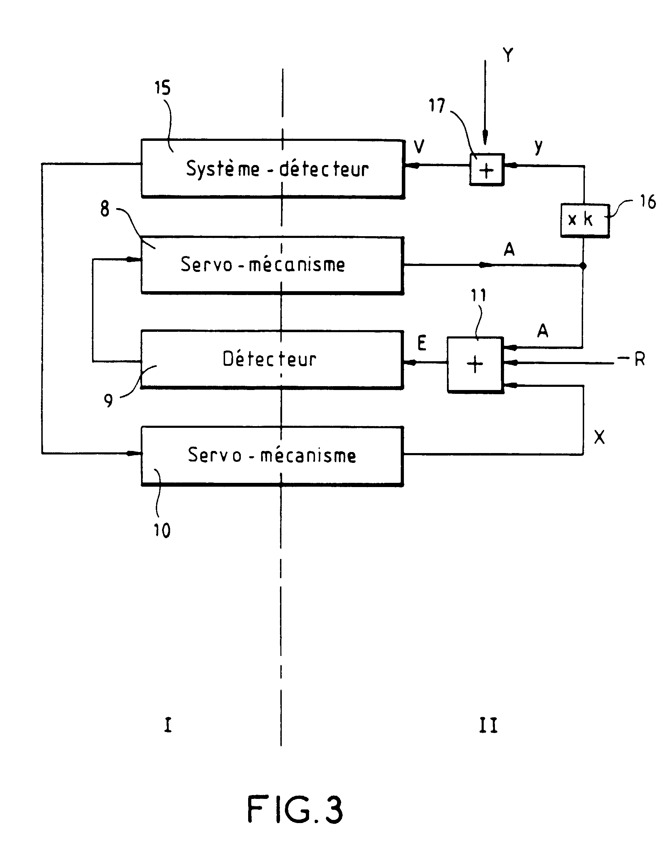

La figure 3 décrit un schéma synoptique symbolique des boucles d'asservissement du dispositif de la figure 2.

Ce schéma synoptique est divisé en deux zones I et II. La zone I ne contient que des grandeurs électriques et la zone II ne contient que des grandeurs mécaniques. Le détecteur 9 transforme l'écart de piste E en un signal électrique envoyé dans le servomécanisme 8 du moteur de miroir radial ; le servomécanisme 8, qui a une fréquence de coupure typique de 3 à 4 kHz, agit alors de façon à annuler l'écart E.

Le détecteur 9 symbolise tout moyen connu de l'homme de l'art permettant de détecter l'écart de piste E. E est représenté symboliquement par l'application des grandeurs A, -R et X sur un additionneur il, qui n'est que la représentation symbolique du lien géométrique qui existe entre les variables E, A, -R et X.

Le déplacement V est représenté comme résultant symboliquement de l'application des grandeurs Y et y sur l'additionneur 17, qui n'est que la représentation symbolique du lien géométrique qui existe entre les variables V, Y et y.

De même, la grandeur y résulte symboliquement de l'application de la grandeur A sur le multiplicateur 16 selon la loi $y = k \times A$. Cette dernière relation est déduite des deux relations ci-dessous :

$$y = L \times i$$

déjà mentionnée plus haut, et

$$A = f \times i$$

par définition de la distance focale f.

Il vient donc $k = L/f$.

Selon l'invention, le servomécanisme 10 du servo-moteur linéaire tend à annuler le déplacement vertical V dont l'amplitude et le sens sont mesurés par le système détecteur 15.

Le servomécanisme 10 annule la composante y, liée à l'angle i, ce qui a pour effet de ramener le faisceau focalisé vers le centre du champ de l'objectif. Dans le même temps, ce servomécanisme annule la composante Y, ce qui a un effet contraire.

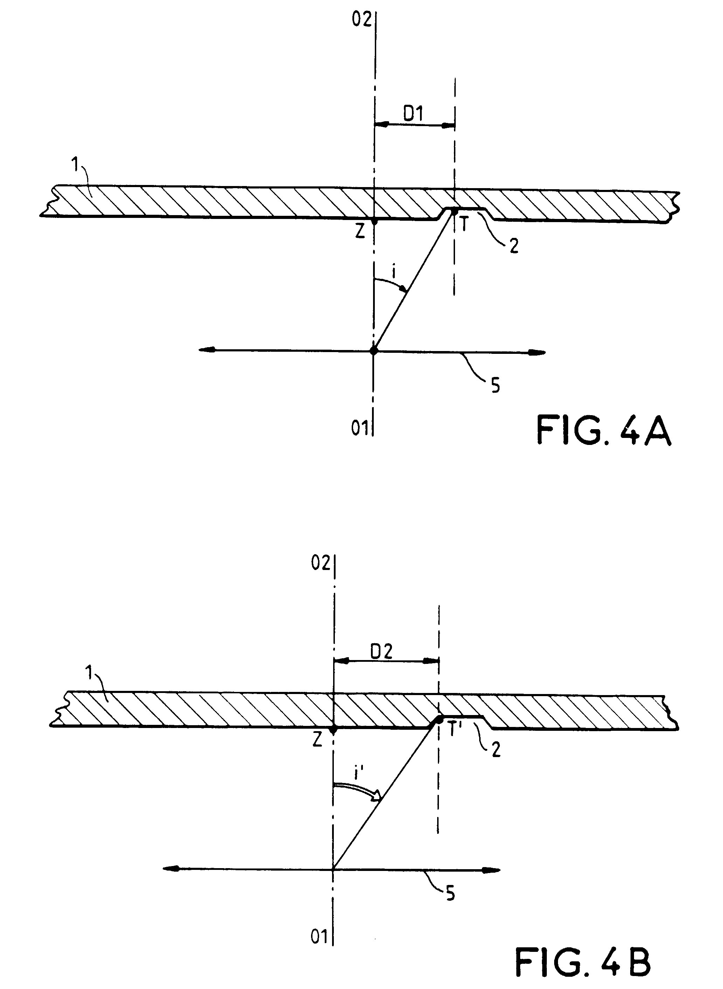

La figure 4A représente, à titre explicatif, la position occupée par le centre T de la tache de focalisation dans le cas où le servomécanisme 10 n'est pas activé. Le centre T de la tache de focalisation se trouve à la distance $D1 = |A|$ du point Z (A étant une grandeur algébrique, la distance D1 qui lui est associée est égale au module de A).

Selon l'invention, quand le servomécanisme 10 est actif et reçoit les informations en provenance du système-détecteur 15, le centre de la tache de focalisation se trouve en T', à la distance $D2 = f \times i'$ du point Z comme cela est indiqué en figure 4B. La correction de pupille est assurée à l'aide du moteur linéaire par l'intermédiaire de la bobine B2. Sur les figures 4A et 4B les distances D1 et D2 peuvent contenir typiquement 10 ou 20 pistes. Pour des raisons de clarté un seul sillon a été représenté sur ces figures, et sa largeur a été exagérée.

La distance focale de l'objectif étant f, on sait qu'on peut écrire :

D2 = f x i', où i' est l'angle défini précédemment.

On sait que Y = L x i', il vient donc :

D2 = (f x Y)/L soit D2 = Y/k.

Soit un objectif présentant une distance focale f = 3,9 mm. Le disque 1 ayant une planéité de ± 0,3 mm, il vient Y = 0,3 mm. La distance L ayant pour valeur nominale 50 mm, on peut alors calculer la distance D2 = 23 µm.

Pour un objectif présentant un champ de diamètre allant de 150 à 300 µm, cet écart est tout-à-fait acceptable alors que l'effet de diaphragme de 0,3 mm qui existait avant correction était préjudiciable.

Le gain de la boucle décrite en figure 3 est proportionnel, en ce qui concerne le terme y, à la distance L qui sépare le centre Q du miroir 6 de correction de suivi radial de l'axe z1 z2 défini par les cellules de détection 12 et 13. Une correction électronique peut être introduite pour maintenir constant ce gain.

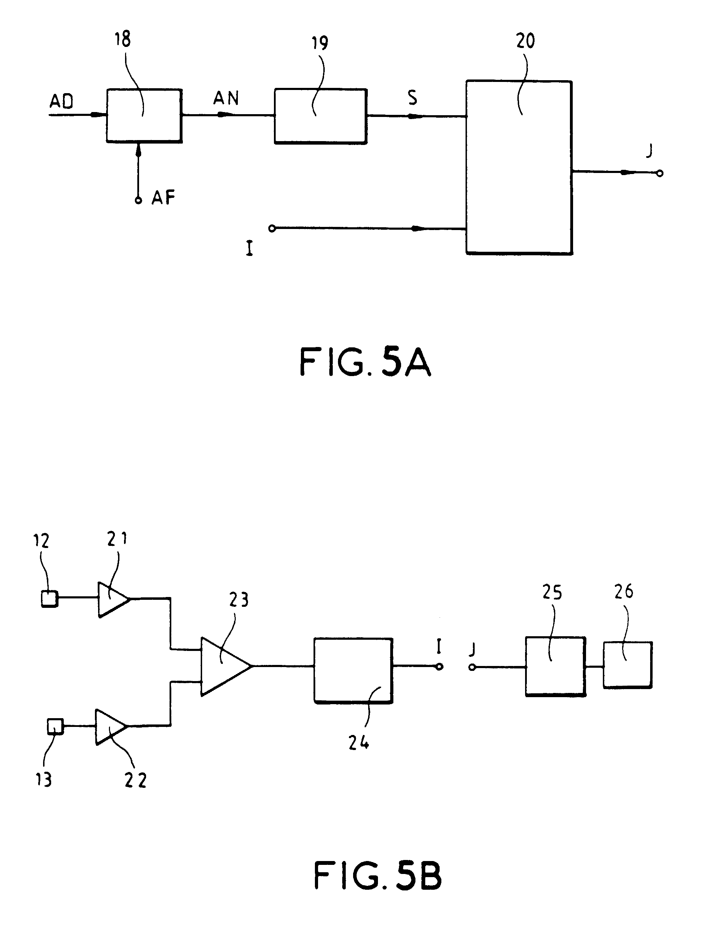

Cette correction peut être effectuée en utilisant l'adresse courante de l'équipage mobile suivant le principe décrit en figure 5A dans le cas d'une boucle de servomécanisme analogique du moteur linéaire.

L'adresse courante de piste AD de l'équipage mobile est connue à tout instant, comme cela est décrit dans le brevet français n° 85 17560.

Une nouvelle adresse AN est calculée en ajoutant, à l'aide du circuit 18, une valeur d'adresse fixe AF à l'adresse courante AD. Un signal analogique S proportionnel à L est alors déduit de l'adresse AN à l'aide d'un convertisseur numérique-analogique 19, à la quantification près du pas des pistes. Ce signal S permet de commander un diviseur analogique 20 dont l'entrée I et la sortie J sont reliées à la boucle du servo-moteur linéaire comme cela est indiqué en figure 5B dans le cas d'une boucle de servomécanisme analogique.

La figure 5B décrit le circuit dans lequel s'intègre le diviseur analogique 20. Les cellules détectrices 12 et 13 sont respectivement reliées aux amplificateurs 21 et 22. Les signaux issus desdits amplificateurs sont soustraits l'un de l'autre par l'intermédiaire du circuit 23 dont le signal de sortie est alors envoyé dans le circuit de filtrage 24 comme cela est habituellement pratiqué pour stabiliser les boucles des servomécanismes. La sortie du circuit de filtrage 24 est reliée à l'entrée I du diviseur analogique 20 dont la sortie J est elle-même reliée à l'entrée d'un amplificateur de puissance 25. Ce dernier est raccordé au moteur linéaire 26.

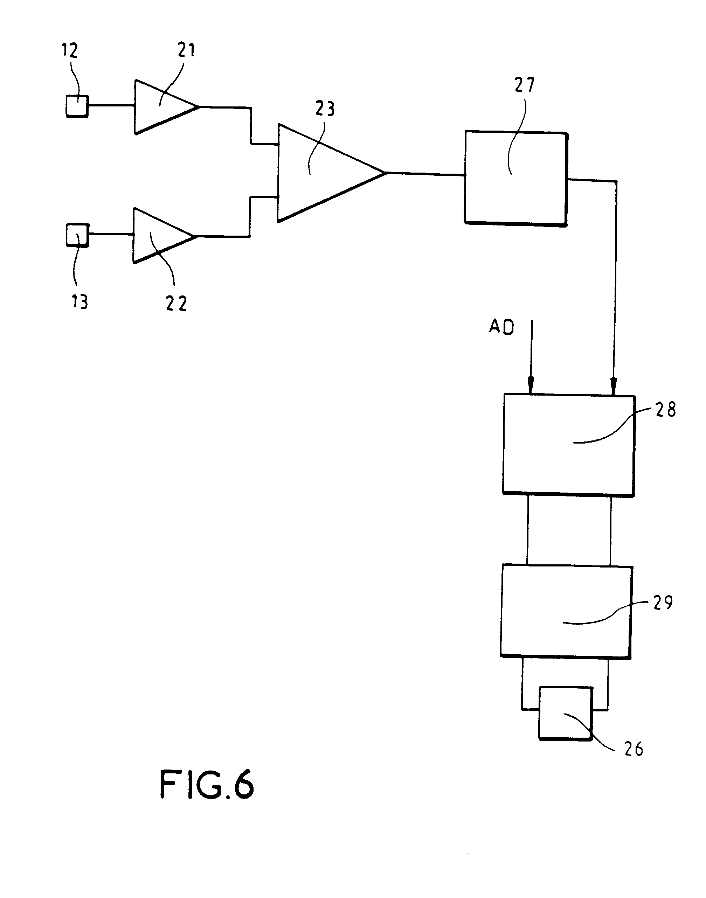

La figure 6 décrit comment est effectuée la correction de gain dans le cas d'une boucle de servomécanisme entièrement numérique.

Les signaux détectés par les cellules 12 et 13 sont amplifiés par les circuits respectifs 21 et 22. Les signaux obtenus sont, de même que précédemment, soustraits l'un de l'autre et le signal différence obtenu est envoyé dans un circuit de conversion analogique-numérique 27. Le signal numérique obtenu ainsi que l'adresse courante de piste AD sont alors envoyés directement au microprocesseur 28 qui gère le servomécanisme. Ce dernier délivre alors, par exemple, des trains d'impulsions d'amplitude et de longueur constantes, mais d'occurence variable qui viennent commander un pont d'alimentation 29 du moteur d'accès 26.

Selon le mode de réalisation préférentiel de l'invention, le miroir 6 fixé au bâti du lecteur-enregistreur assure les corrections de suivi radial sous l'influence de la bobine motrice B3. Dans ce mode de réalisation, le miroir 6 est très agile. Le gain de la boucle d'asservissement de suivi radial est alors très élevé et peut atteindre, par exemple, la valeur de 1000 en basses fréquences. Ainsi la valeur résiduelle de l'écart à la piste n'est-elle plus, après action du servomécanisme, que le millième de ce qu'elle était avant son action.

Un autre mode de réalisation de l'invention peut aussi être réalisé.

Selon cet autre mode de réalisation, le miroir 6 n'assure pas la correction de suivi radial mais assure la correction de pupille. La correction de suivi radial est alors assurée par le miroir 4 mû par le servo-moteur linéaire 10 de l'équipage mobile. Le servo-moteur linéaire est alimenté par les signaux d'écart de piste E et la différence des signaux issus des cellules détectrices 12 et 13 est ici envoyée dans la bobine B3 qui commande la rotation du miroir 6 afin d'assurer la correction de pupille.

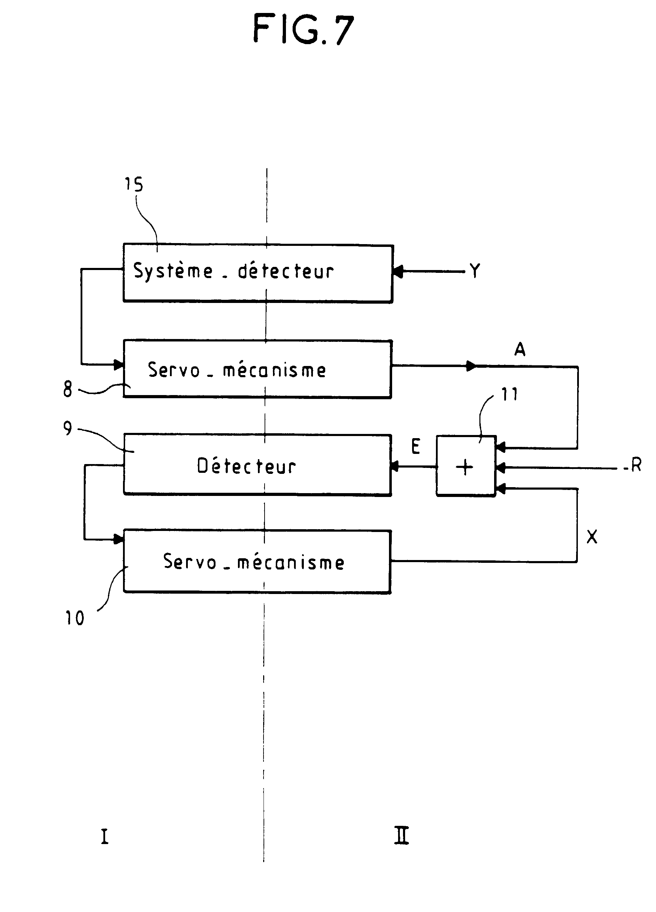

Le schéma synoptique des boucles d'asservissement de cette variante est représenté par la figure 7. Le gain de la boucle du miroir 6 est ici faible, par exemple de l'ordre de 10 en basses fréquences, comparativement à celle du moteur linéaire, par exemple de l'ordre de 1000 en basses fréquences.

Il est ici aussi possible de rendre le gain de boucle constant en le divisant par un facteur proportionnel à la distance L, comme cela a été décrit précédemment. Il suffit de remplacer, dans la description précédente, le moteur linéaire 26 par la bobine B3.

## Revendications

1. Dispositif d'accès et de suivi de pistes disposées à la surface de supports mobiles contenant des informations lisibles et/ou enregistrables optiquement par faisceau laser, ledit dispositif comportant au moins une tête optique constituée d'un chariot rigide (3) permettant l'accès du faisceau laser à la piste à lire et/ou à enregistrer, d'un objectif (5) relié rigidement au chariot rigide (3) et destiné à focaliser le faisceau laser à la surface du support mobile, d'un miroir de renvoi (4) relié rigidement au chariot rigide (3) et destiné à orienter le faisceau laser vers l'objectif (5), d'au moins une bobine motrice (B2) permettant l'accès du chariot (3) à la piste à lire et/ou à enregistrer, et d'au moins une bobine motrice (B1) permettant les déplacements du chariot (3) destinés à focaliser le faisceau laser, et un miroir (6) non solidaire de la tête optique et permettant d'orienter le faisceau laser vers la tête optique ainsi qu'une bobine motrice (B3) permettant de faire pivoter ledit miroir (6), caractérisé en ce qu'il comprend en outre des moyens (15), constitués de deux cellules de détection photo-électriques (12, 13), pour détecter tout décentrement du faisceau par rapport à l'axe (01 02) perpendiculaire au plan de la pupille de l'objectif (5) et passant par le centre de celle-ci, suivant la direction définie par l'axe (f1 f2) perpendiculaire audit axe (01 02) et contenu dans le plan perpendiculaire au plan de la pupille et contenant le centre (P) du miroir de renvoi (4) et le centre (Q) du miroir (6) permettant d'orienter le faisceau vers la tête optique, et des servo-mécanismes (10, 8, 6) pour corriger ledit décentrement en fonction du décentrement détecté par les deux cellules de détection (12, 13).

2. Dispositif selon la revendication 1, caractérisé en ce que les deux cellules (12, 13) sont positionnées sur un axe (z1 z2) perpendiculaire à la surface du support mobile, situé entre le miroir de renvoi (4) et le miroir (6) permettant d'orienter le faisceau vers la tête optique, ledit axe interceptant la droite (f1 f2) définie par le centre (P) du miroir de renvoi (4) et le centre (D) de l'ouverture (O) de la tête optique, lesdites cellules étant situées à égale distance et de part et d'autre du point d'interception (C) dudit axe (z1 z2) et de la droite (f1 f2).

3. Dispositif selon l'une quelconque des revendications 1 ou 2, caractérisé en ce que les moyens (12, 13, 15, 10) pour détecter et corriger tout décentrement du faisceau comportent des premiers moyens (21) pour amplifier le signal issu d'une premiere cellule de détection (12), des seconds moyens (22) pour amplifier le signal issu d'une seconde cellule de détection (13), et des moyens supplémentaires (23) pour faire la différence des signaux issus desdits premiers moyens (21) et desdits seconds moyens (22).

4. Dispositif selon la revendication 3, caractérisé en ce qu'il comprend des moyens (20, 24, 25) reliant les moyens supplémentaires (23) avec la bobine motrice (B2) qui permet l'accès aux pistes du chariot rigide (3).

5. Dispositif selon la revendication 3, caractérisé en ce qu'il comprend des moyens (20, 24, 25) reliant les moyens supplémentaires (23) avec la bobine motrice (B3) qui permet de faire pivoter le miroir (6) permettant d'orienter le faisceau laser vers la tête optique.

6. Dispositif selon la revendication 4, caractérisé en ce qu'il comprend des moyens (B3) permettant d'assurer le suivi radial à l'aide du miroir (6) permettant d'orienter le faisceau vers la tête optique.

7. Dispositif selon la revendication 5, caractérisé en ce qu'il comprend des moyens (B2) permettant d'assurer le suivi radial à l'aide du miroir de renvoi (4).

8. Dispositif selon l'une quelconque des revendications 4 à 7 , caractérisé en ce que les moyens (20, 24, 25) comprennent des moyens (18, 19, 20, 27, 28) rendant constant le gain de la boucle d'asservissement (15, 10).

9. Dispositif selon la revendication 8, caractérisé en ce que les moyens (18, 19, 20) rendant constant le gain de la boucle d'asservissement (15, 10) comprennent un circuit (18) calculant une nouvelle adresse (AN) en ajoutant à l'adresse courante de la piste (AD) une adresse fixe (AF), un convertisseur numérique-analogique (19) permettant de fournir un signal analogique (S) à partir de la nouvelle adresse (AN) et un diviseur analogique (20) commandé par le signal analogique (S).

10. Dispositif selon la revendication 8, caractérisé en ce que les moyens (27, 28) rendant constant le gain de la boucle d'asservissement (15,10) comprennent un convertisseur analogique numérique (27) dont le signal d'entrée est issu des moyens (23) faisant la différence des signaux provenant des deux cellules de détection photo-électriques (12, 13), et le microprocesseur (28) qui gère le servomécanisme, ledit microprocesseur recevant en entrée le signal issu du convertisseur analogique numérique (27) ainsi que l'adresse courante de piste (AD).

**Patentansprüche**

1. Vorrichtung für den Zugriff auf und die Verfolgung von auf der Oberfläche von beweglichen, mittels eines Laserstrahls optisch les- und/oder beschreibbaren Datenträgern angeordneten Spuren, wobei die besagte Vorrichtung mindestens einen aus einem starren Schlitten (3) bestehenden optischen Kopf, der den Zugriff des Laserstrahls auf die zu lesende und/oder zu beschreibende Spur ermöglichte ein starr mit dem starren Schlitten (3) verbundenes und zur Fokussierung des Laserstrahls auf die Fläche des beweglichen Trägers bestimmtes Objektiv (5), einen starr mit dem starren Schlitten (3) verbundenen und zur Ausrichtung des Laserstrahls auf das Objektiv (5) bestimmten Umlenkspiegel (4), mindestens eine Antriebsspule (B2), die den Zugriff des Schlittens (3) auf die zu lesende und/oder zu beschreibende Spur ermöglicht. mindestens eine Antriebsspule (B1), die die Bewegungen des Schlittens (3) zwecks Fokussierung des Laserstrahls ermöglicht, einen mit dem optischen Kopf nicht verbundenen und zur Ausrichtung des Laserstrahls auf den optischen Kopf bestimmten Spiegel (6), sowie eine Antriebsspule (B3), die das Schwenken des besagten Spiegels (6), aufweist, **dadurch gekennzeichnet, daß** sie zudem mit Mitteln (15) bestehend aus zwei Photozellen (12, 13) zum Aufspüren jeglicher Dezentrierung des Strahls relativ zu der senkrecht zur Ebene der Pupille des Objektivs (5) durch den Mittelpunkt dieser Pupille führenden Achse (01 02) und nach der Richtung, die durch die senkrecht zur besagten Achse (01 02) orientierte und in der senkrecht zur Ebene der Pupille liegenden Ebene gelegene und den Mittelpunkt (P) des Umlenkspiegels (4) sowie den Mittelpunkt (Q) des die Ausrichtung des Strahls auf den optischen Kopf ermöglichenden Spiegels (6) enthaltende Achse (f1 f2) definiert ist, und Servomechanismen (10, 8, 6) zur Korrektur der besagten Dezentrierung gemäß der von den beiden Überwachungszellen (12, 13) aufgespürten Dezentrierung versehen ist.

2. Vorrichtung nach Anspruch 1, **dadurch gekennzeichnet, daß** die beiden Zellen (12, 13) auf einer senkrecht zur Fläche des beweglichen Trägers und zwischen dem Umlenkspiegel (4) und dem die Ausrichtung des Strahls auf den optischen Kopf ermöglichenden Spiegel (6) liegenden Achse (z1 z2) angeordnet sind, wobei die besagte Achse die durch den Mittelpunkt (P) des Umlenkspiegels (4) und den Mittelpunkt (D) der Öffnung (O) des optischen Kopfes definierte Gerade (f1 f2) schneidet, wobei die besagten Zellen beiderseits des Schnittpunkts (C) der besagten Achse (z1 z2) und der Gerade (f1 f2) und in gleichem Abstand zu diesem Schnittpunkt angeordnet sind.

3. Vorrichtung nach einem beliebigen der Ansprüche 1 oder 2, **dadurch gekennzeichnet, daß** die zum Aufspüren und Korrigieren jeglicher Dezentrierung des Strahls vorgesehenen Mittel (12, 13, 15, 10) zum einen mit Mitteln (21) zur Verstärkung des von einer ersten Überwachungszelle (12) kommenden Signals, zum anderen mit Mitteln (22) zur Verstärkung des von einer zweiten Überwachungszelle (13) kommenden Signals, und mit zusätzlichen Mitteln (23) zur Bildung der Differenz zwischen den von den ersten Mitteln (21) und von den zweiten Mitteln (22) stammenden Signalen versehen sind

4. Vorrichtung nach Anspruch 3, **dadurch gekennzeichnet, daß** sie mit Mitteln (20, 24, 25) versehen ist, welche die zusätzlichen Mittel (23) mit der Antriebsspule (B2), die den Zugriff des starren Schlittens (3) auf die Spuren ermöglicht, verbinden.

5. Vorrichtung nach Anspruch 3, **dadurch gekennzeichnet, daß** sie mit Mitteln (20, 24, 25) versehen ist, welche die zusätzlichen Mittel (23) mit der Antriebsspule (B3), die das Schwenken des Spiegels (6) zur Ausrichtung des Laserstrahls auf den optischen Kopf ermöglicht, verbinden.

6. Vorrichtung nach Anspruch 4, **dadurch gekennzeichnet, daß** sie mit Mitteln (B3) versehen ist, welche die radiale Spurverfolgung mit Hilfe des zur Ausrichtung des Laserstrahls auf den optischen Kopf vorgesehenen Spiegels (6) ermöglichen.

7. Vorrichtung nach Anspruch 4, **dadurch gekennzeichnet, daß** sie mit Mitteln (B2) versehen ist, welche die radiale Spurverfolgung mit Hilfe des Umlenkspiegels (4) ermöglichen.

8. Vorrichtung nach einem beliebigen der Ansprüche 4 bis 7, **dadurch gekennzeichnet, daß** die Mittel (20, 24, 25) mit Mitteln (18, 19, 20) versehen sind. durch welche die Verstärkung des Regelkreises (15, 10) konstant gehalten wird.

9. Vorrichtung nach Anspruch 8, **dadurch gekennzeichnet, daß** die zur Konstanthaltung der Verstärkung des Regelkreises (15, 10) vorgesehenen Mittel (18, 19, 20) einen Kreis (18), der eine neue Adresse (AN) durch Summieren der laufenden Spuradresse (AD) und einer festen Adresse (AF) errechnet, einen DigitalAnalog-Wandler (19), durch den, ausgehend von der neuen Adresse (AN), ein analoges Signal (S) ausgegeben wird, und einen durch das analoge Signal (S) gesteuerten Analogteiler (20) aufweisen.

10. Vorrichtung nach Anspruch 8, **dadurch gekennzeichnet, daß** die zur Konstanthaltung der Verstärkung des Regelkreises (15, 10) vorgesehenen Mittel (27, 28) mit einem Analog-Digital-Wandler (27), dessen Eingangssignal von den Mitteln (23) herrührt, welche die Differenz der aus den zwei Überwachungsphotozellen (12, 13) stammenden Signale bilden, und mit dem den Servomechanismus steuernden Mikroprozessor (28) versehen sind, wobei der besagte Mikroprozessor als Eingangssignal das Signal, das von den Analog-Digital-Wandler (27) ausgegeben wird, sowie die laufende Spuradresse (AD) erhält.

**Claims**

1. Device for access and follow-up of tracks arranged at the surface of moving supports containing readable and/or recordable information by laser beam, the said device comprising at least one optical head made up of a rigid carrier (3) enabling the access of the laser beam to the track for reading and/or recording, an objective (5) rigidly linked to the rigid carrier (3) and provided for focusing the laser beam at the surface of the moving support, a reflecting mirror (4) rigidly linked to the rigid carrier (3) and provided for pointing the laser beam towards the objective (5), at least one driving coil (B2) enabling the access of the carrier (3) to the track to read and/or to record, and at least one driving coil (B1) enabling the displacements of the carrier (3) intended for focusing the laser beam, and a mirror (6) non solidly linked to the optical head and enabling the pointing of the laser beam towards the optical head as well as a driving coil (B3) enabling the swivelling of the said mirror (6), characterised by the fact that it comprises also means (15) made up of two photoelectric detection cells (12, 13) for detecting any center off-setting of the beam with respect to the axis (01 02) perpendicular to the plane of the diaphragm of the objective (5) and passing through the center of this latter, according to the direction defined by the axis (f1 f2) perpendicular to the said axis (01 02) and located in the plane perpendicular to the plane of the diaphragm and containing the center (P) of the reflecting mirror (4) and the center (Q) of the mirror (6) enabling to point the beam towards the optical head, and servomechanisms (10, 8, 6) for correcting the said center off-setting in relation with the center off-setting detected by the two detection cells (12, 13).

2. Device according to claim 1, characterised by the fact that the two cells (12, 13) are positioned on an axis (z1 z2) perpendicular to the surface of the moving support, located between the reflecting mirror (4) and the mirror (6), enabling to point the beam towards the optical head, the said axis intercepting the straight line (f1 f2) defined by the center (P) of the reflecting mirror (4) and the center (D) of the aperture (O) of the optical head, the said cells being located at equal distance and on both sides of the interception point (C) of the said axis (z1 z2) and of the straight line (f1 f2).

3. Device according to any one of the claims 1 or 2, characterised by the fact that the means (12, 13, 15, 10) for detecting and correcting any center off-setting of the beam comprise first means (21) for amplifying the signal emitted from a first detection cell (12), second means (22) for amplifying the signal emitted from a second detection cell (13) and additional means (23) for discriminating the signals emitted by the said first means (21) from the said second means (22).

4. Device according to claim 3, characterised by the fact that it comprises means (20, 24, 25) linking the additional means (23) to the driving coil (B2) which enables the access of the rigid carrier (3) to the tracks.

5. Device according to claim 3, characterised by the fact that it comprises means (20, 24, 25) linking the additional means (23) to the driving coil (B3) which enables the swivelling of the mirror (6) enabling the pointing of the laser beam towards the optical head.

6. Device according to claim 4, characterised by the fact that it comprises means (B3) enabling to ensure the radial follow-up by means of the mirror (6) which enables the pointing of the beam towards the optical head.

7. Device according to claim 5, characterised by the fact that it comprises means (B2) enabling to ensure the radial follow-up by means of the reflecting mirror (4).

8. Device according to anyone of the claims 4 to 7, characterised by the fact that the means (20, 24, 25) comprise means (18, 19, 20, 27, 28) which make constant the gain of the servo-control loop (15, 10).

9. Device according to claim 8, characterised by the fact that the means (18, 19, 20) which make constant the gain of the servo-control loop (15, 10) comprise a circuit (18) which calculates a new address (AN) by adding to the current address of the track (AD) a fix address (AF), a digital-analog converter (19) enabling the supply of an analog signal (S) from the new address (NA) and an analog divider (20) controlled by the analog signal (S).

10. Device according to claim 8, characterised by the fact that the means (27, 28) which make constant the gain of the servo-control loop (15, 10) comprise an analog-digital converter (27) the input signal of which is emitted by the means (23) discriminating the difference between the signals coming from the two photoelectric detection cells (12, 13) and the microprocessor (28) which runs the servomechanism, the said microprocessor receiving in input the signal emitted by the analog digital converter (27) as well as the current track address (AD).

FIG.1

EP 0 543 707 B1

FIG.2

EP 0 543 707 B1

FIG.3

FIG. 4A

FIG. 4B

FIG. 5A

FIG. 5B

FIG.6

# FIG.7